# FASCICULE DE BREVET EUROPEEN

(11) **EP 1 437 521 B1**
(45) Date de publication et mention de la délivrance du brevet: **03.01.2007**
(21) Numéro de dépôt: 04290037.3
(22) Date de dépôt: 07.01.2004
(51) Int. Cl.: F16D 55/02, B60T 1/06

(54) **Dispositif de fixation d'un étrier de frein à disque sur une fusée d'essieu, notamment pour véhicule automobile**
Vorrichtung zur Befestigung des Bremssattels einer Scheibenbremse auf einem Achsschenkel, insbesondere für ein Kraftfahrzeug
Device for fixing a disc brake caliper on a stub axle, in particular for a motor vehicle

(30) Priorité: 07.01.2003 FR 0300108
(43) Date de publication de la demande: 14.07.2004
(73) Titulaire: Peugeot Citroen Automobiles SA, 92200 Neuilly sur Seine (FR)
(72) Inventeur: Livolsi, Loïc, 95800 Cergy le Haut (FR)
(74) Mandataire: Coester, Jacques Charles

(56) Documents cités:
- EP-A- 1 081 019
- DE-A- 4 303 417
- US-A- 3 848 709

## Description

La présente invention se rapporte de manière générale aux freins à disque, notamment pour véhicules automobiles, et concerne plus particulièrement la fixation des étriers de tels freins à disque.

Les étriers des freins à disque sont, de manière usuelle, fixés sur la fusée d'essieu correspondante par l'intermédiaire de deux vis. Au cours d'une opération de freinage, le disque étant solidaire de l'arbre ou de la roue, le serrage s'effectue sur un secteur de disque limité qu'entourent les étriers à l'intérieur desquels se déplacent les plaquettes de frein. Les vis de fixation de l'étrier sont alors soumises à un couple de serrage afin de plaquer correctement l'étrier sur la fusée d'essieu.

La fixation réalisée par ces vis encaisse également un couple correspondant à l'effort de freinage. De manière à résister à ce couple, il est alors nécessaire d'utiliser des vis d'un diamètre relativement important et on emploie communément des vis de 12 millimètres de diamètre. Cependant, la masse des véhicules automobiles modernes a tendance à augmenter du fait de l'emploi d'équipements de plus en plus abondants. En outre, et malgré les limitations de vitesse imposées par l'autorité publique, les automobilistes ont tendance à utiliser leur véhicule au maximum de leurs performances. Ainsi, en cas de freinage à grande vitesse d'un véhicule ayant une masse importante, les freins sont soumis à des efforts considérables et le couple de freinage devient très important. La dimension des vis de fixation devient alors limite pour l'effort de cisaillement auquel elles sont soumises. Une solution serait d'augmenter les dimensions de ces vis. Cependant, l'environnement de la fusée d'essieu rend difficile l'augmentation du diamètre des vis et, d'autre part, l'outil d'assemblage de l'étrier sur la fusée d'essieu correspondante devrait être modifié tant au niveau de la vis de serrage qu'au niveau du couple de serrage plus important qu'il y aurait lieu d'appliquer.

Il a déjà été proposé de résoudre le problème ci-dessus en découplant l'effort de maintien en position de l'étrier sur la fusée d'essieu correspondante et l'effort de résistance au cisaillement lors de l'application du couple de freinage. Les étriers sont alors toujours maintenus en position par des vis dont le diamètre n'a pas besoin d'être augmenté, tandis qu'un moyen supplémentaire permet d'encaisser le couple de freinage. De tels dispositifs de fixation d'un étrier sont par exemple connus des documents EP 1081019, US 3848709 et DE 4303417. L'invention vise à améliorer ces dispositifs connus.

L'invention est ainsi particulièrement enoncée à la revendication 1 annexe.

Diverses autres caractéristiques avantageuses de l'invention ressortent des revendications 2 à 6.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue de face d'un dispositif de type connu pour la fixation d'un étrier de frein à disque sur une fusée d'essieu correspondante d'un véhicule automobile ;
- la figure 2 est une vue en coupe du dispositif de la figure 1 prise le long de la ligne II-II de cette figure ;
- la figure 3 est une vue en coupe semblable à la figure 2 et illustrant un mode de réalisation d'un dispositif non-conforme à l'invention ;
- les figures 4 et 5 illustrent respectivement en perspectives avant et arrière éclatées le dispositif montré en coupe à la figure 3 ;
- la figure 6 est une vue en coupe également semblable à la figure 2 mais illustrant un second mode de réalisation d'un dispositif non-conforme à l'invention ;
- les figures 7 et 8 illustrent respectivement en perspectives avant et arrière éclatées le dispositif montré en coupe à la figure 6 ;
- la figure 9 est une vue éclatée en coupe d'une variante du second mode de réalisation selon la figure 6 ;
- la figure 10 est une vue semblable à la figure 8 de la variante de réalisation selon la figure 9 ;
- la figure 11 est une vue quelque peu semblable à la figure 2 et illustre un mode de réalisation du dispositif selon l'invention lorsque l'étrier est monté sur la fusée d'essieu à l'aide d'une seule vis en position centrale ;
- la figure 12 est une vue éclatée du montage de la figure 11 ;
- la figure 13 est une vue en coupe encore semblable à la figure 2 d'un mode de réalisation d'un dispositif non-conforme à l'invention ;
- la figure 14 est une vue partielle de la figure 13 illustrant un détail de réalisation ;
- la figure 15 est une vue éclatée de la figure 14 ;
- les figures 16 et 17 illustrent respectivement en perspectives arrière et avant éclatées le dispositif mis en coupe à la figure 13 ;
- la figure 18 est une variante de réalisation du détail de la figure 14 ;
- la figure 19 est une vue schématique de face de la partie de fusée d'essieu illustrée à la figure 18 ;
- la figure 20 montre une variante de réalisation de la partie de fusée d'essieu de la figure 18.

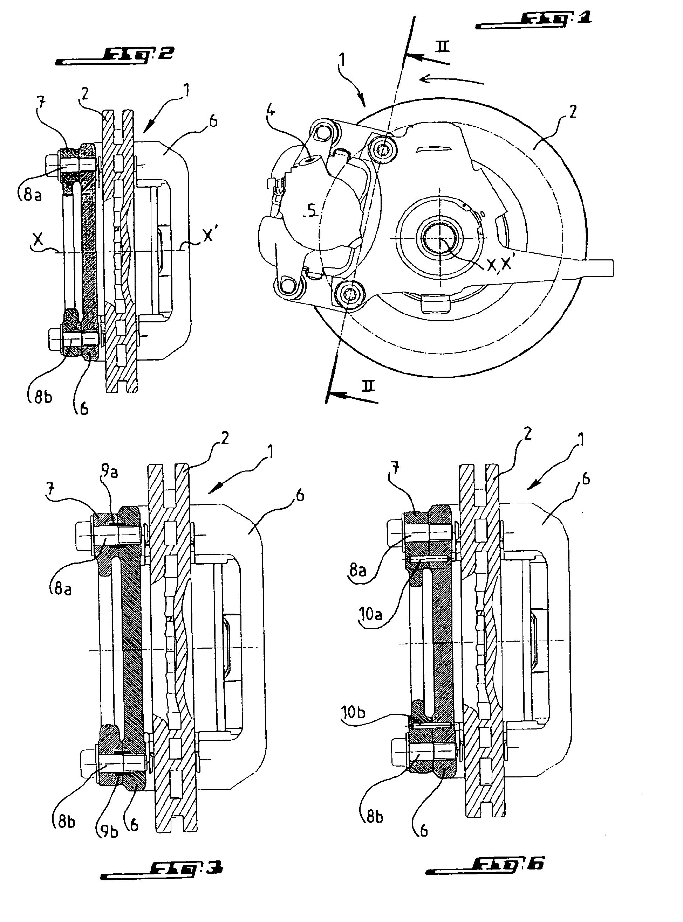

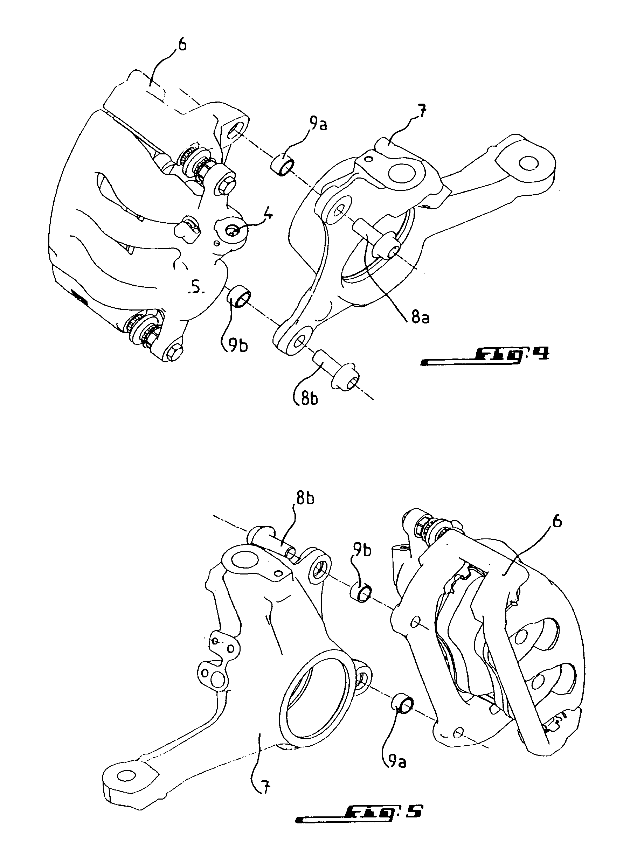

Aux figures 1 et 2, on a représenté de manière schématique une fixation d'étrier de frein à disque d'un véhicule automobile selon une réalisation connue. Dans cette réalisation, le frein à disque est représenté de manière générale par la référence 1 et comprend un plateau ou disque 2 sur lequel est prévu de s'exercer les forces de serrage dans le sens axial, c'est-à-dire parallèlement à l'axe de rotation X-X', lors de l'arrivée d'un fluide hydraulique sous pression commandé par un actionnement de la pédale de frein du véhicule. Le fluide hydraulique est alors amené, via une tubulure non représentée, à l'orifice d'entrée 4 d'un corps 5 dans lequel se trouve le piston de commande des plaquettes de frein. Le disque 2 est solidaire de l'arbre d'entraînement de la roue ou de la roue elle-même et le serrage s'effectue sur un secteur limité de ce disque qu'entoure un étrier 6 représenté partiellement en coupe à la figure 2 et à l'intérieur duquel se déplacent les plaquettes de frein.

Comme cela est représenté au dessin, l'étrier 6 est monté sur une fusée d'essieu correspondante 7 par des vis 8a, 8b.

Ainsi, dans le frein à disque de type connu montré ci-dessus, l'étrier est maintenu sur la fusée d'essieu correspondante par deux vis qui sont soumises lors d'un freinage à un couple de serrage afin de plaquer correctement l'étrier sur la fusée d'essieu, et l'assemblage réalisé par ces vis encaisse également le couple de l'effort de freinage. Comme indiqué plus haut, les vis encaissent alors des efforts importants et la dimension des vis généralement utilisées devient limite pour l'effort de cisaillement auquel elles sont soumises.

Ayant ainsi indiqué comment est réalisée la fixation des étriers de freins dans la technique connue, on va maintenant montrer quelques réalisations connus où l'idée est de découpler l'effort de maintien de l'étrier et l'effort du couple de freinage, en laissant la fonction de maintien de l'étrier aux vis et en utilisant une autre solution technique pour encaisser le couple de freinage.

Dans ce qui suit, les pièces semblables aux diverses pièces des figures 1 et 2 sont indiquées par les mêmes références, et celles-ci ne seront pas davantage décrites.

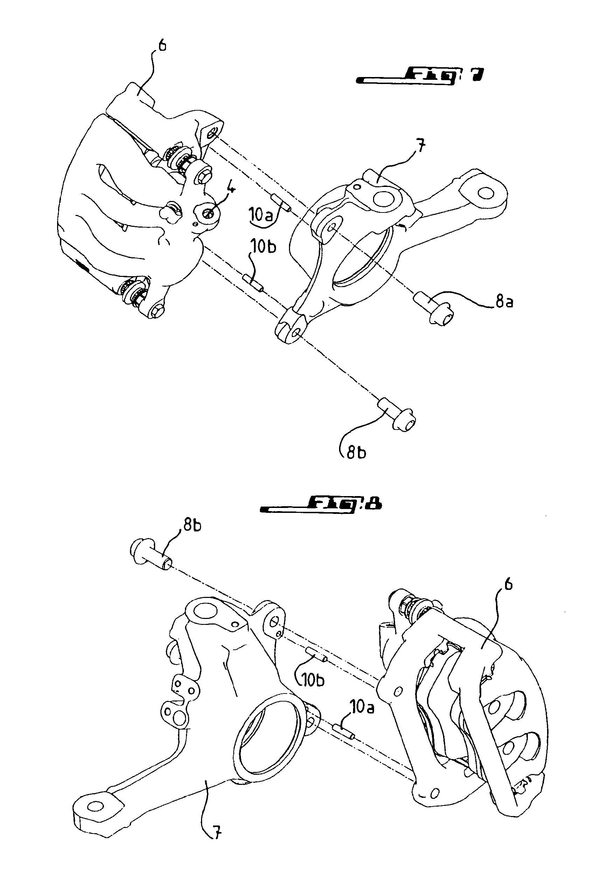

A la figure 3, l'étrier 6 du frein à disque 1 est encore monté sur la fusée d'essieu 7 à l'aide des deux vis 8a, 8b, mais deux douilles de centrage 9a, 9b sont supplémentairement prévues entre la fusée d'essieu et l'étrier autour de chaque vis et concentriquement à ces dernières.

Les douilles 9a, 9b encaissent le couple de freinage en laissant aux vis 8a, 8b la fonction de maintien en position. Cette disposition permet en outre, du fait des douilles 9a, 9b, une mise en position précise et rapide entre la fusée d'essieu 7 et l'étrier 6, tant au montage qu'en maintenance. Les douilles 9a, 9b ont ainsi un effet double, à savoir une fonction de mise en position et une fonction d'encaissement du couple de freinage.

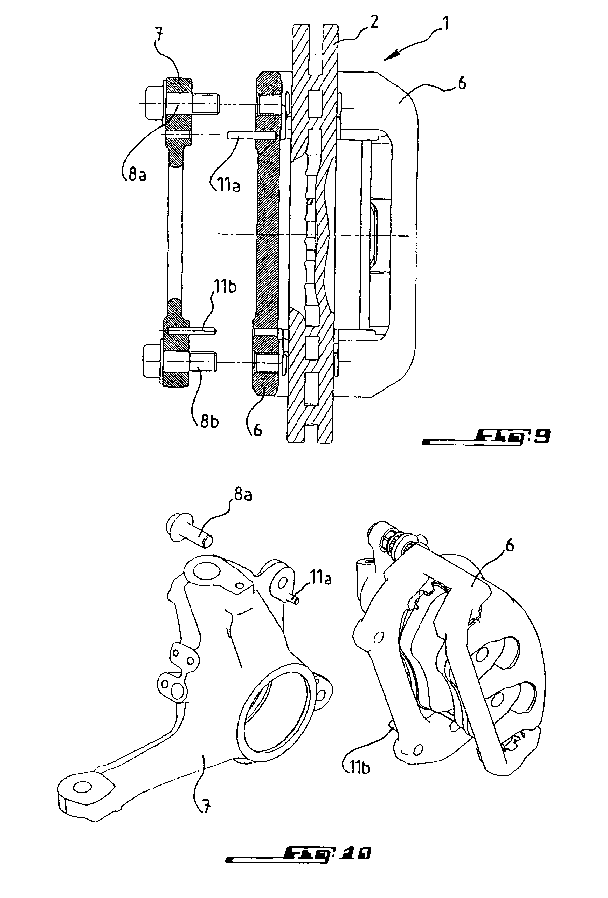

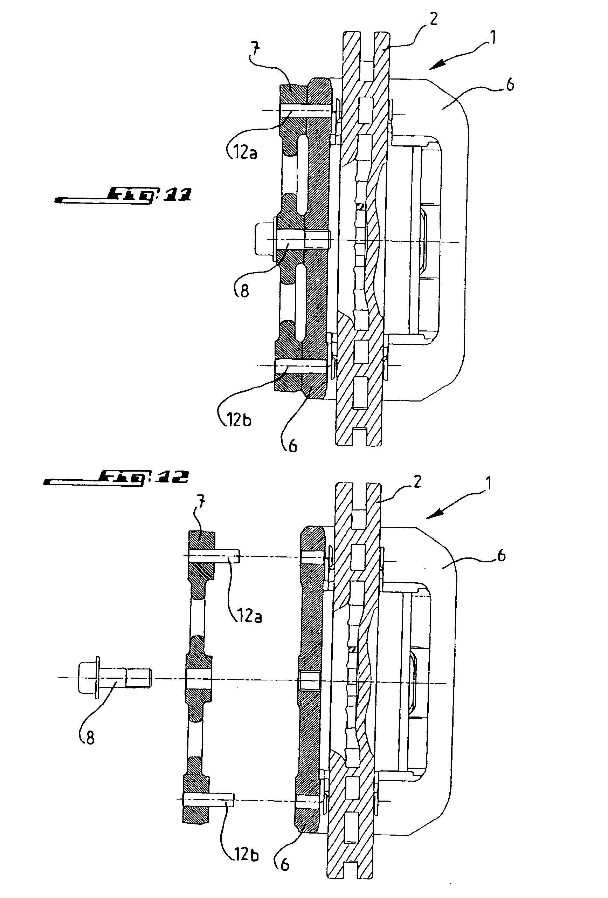

Un éclaté de l'assemblage selon la figure 3 est représenté aux figures 4 et 5 et permet de mieux voir une réalisation non-conforme à l'invention d'un dispositif de maintien de l'étrier sur la fusée d'essieu correspondante.

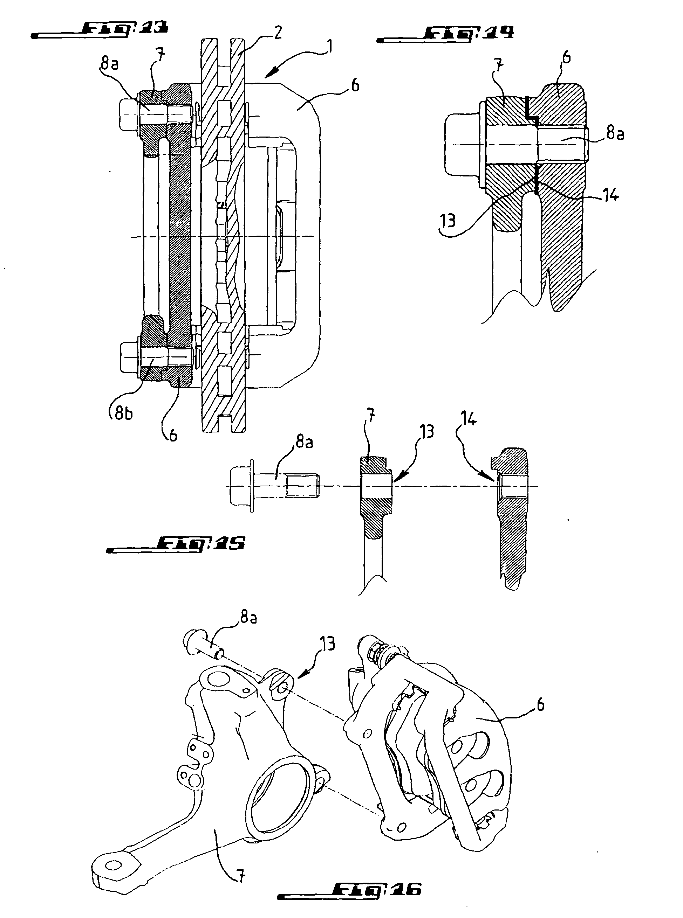

A la figure 6 qui montre un second mode de réalisation non-conforme à l'invention d'un dispositif de fixation de l'étrier d'un frein à disque sur la fusée d'essieu, l'étrier 6 du frein à disque 1 est là encore monté sur la fusée d'essieu 7 à l'aide des deux vis 8a, 8b. Cependant, au lieu des deux douilles 9a, 9b de la réalisation selon les figures 3 à 5, on a prévu ici deux goupilles 10a, 10b insérées dans des trous ménagés respectivement dans le pivot 7 et l'étrier 6.

Comme on le voit aux dessins, les goupilles 10a, 10b sont de préférence dans le même plan que les vis 8a, 8b et sont situées entre les vis à proximité de celles-ci en s'étendant parallèlement aux vis. Cette disposition des goupilles par rapport aux vis est cependant simplement préférable et d'autres dispositions peuvent être prévues.

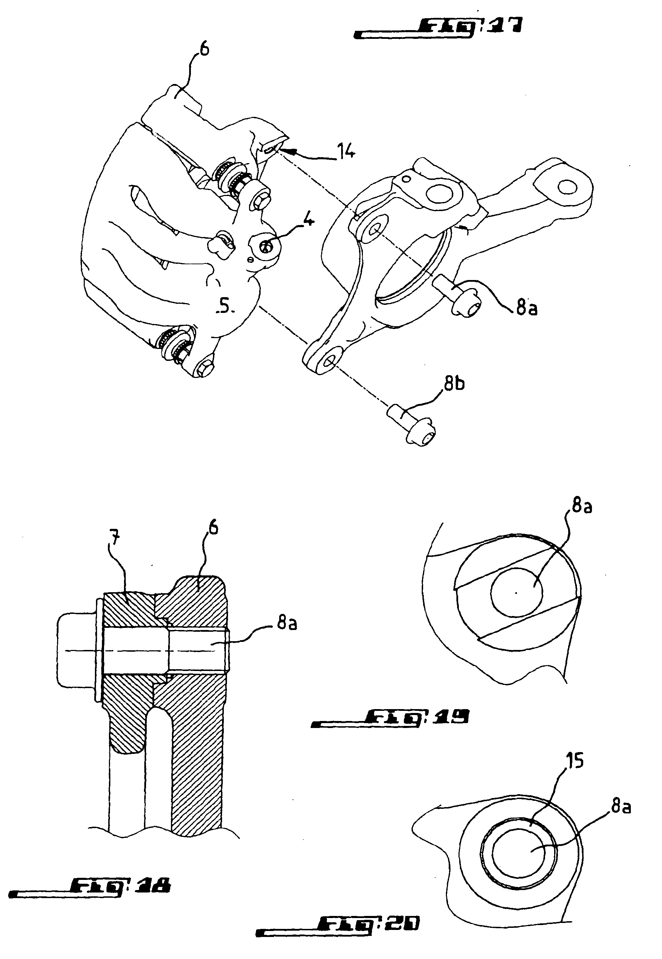

Un éclaté de l'assemblage selon la figure 6 est représenté aux figures 7 et 8 et permet de mieux comprendre cette réalisation où les goupilles 10a, 10b encaissent le couple de freinage en laissant aux vis 8a, 8b la fonction de maintien en position.

L'utilisation des goupilles évite la réalisation de lamage mais ne présente pas, du point de vue du montage et de la maintenance, l'aspect pratique des douilles de centrage 9a, 9b du premier mode de réalisation.

Les figures 9 et 10 montrent une variante de réalisation de la disposition selon les figures 6 à 8 dans laquelle une des goupilles, ici référencée 11a, est solidaire de l'étrier 6 et est introduite dans un trou ménagé dans la fusée d'essieu 7, tandis que la goupille 11b est solidaire de la fusée d'essieu. Cette réalisation fournit un dispositif détrompeur et évite le montage à gauche d'un étrier droit et inversement.

Toute disposition associant la réalisation selon les figures 9 et 10 à celle des figures 6 à 8 est évidemment possible et on peut prévoir une seule goupille solidaire soit de l'étrier soit de la fusée d'essieu, c'est-à-dire semblable à l'une des goupilles 11a ou 11b, tandis que l'autre goupille sera constituée par une pièce distincte, c'est-à-dire semblable à l'une des goupilles 10a ou 10b.

Dans la réalisation selon l'invention, qui est illustrée à la figure 11, l'étrier 6 est ici fixé à la fusée d'essieu 7 à l'aide d'une seule vis 8 montée en position centrale de l'étrier. Cependant, on prévoit toujours deux goupilles comme aux figures 6-8 et 9-10, et celles-ci référencées 12a et 12b sont montées à l'emplacement des vis 8a et 8b des figures précédentes entre l'étrier 6 et la fusée d'essieu 7. Les goupilles 12a, 12b sont ainsi parallèles à la vis de maintien 8 et situées de part et d'autre de la vis à une distance prédéterminée de celle-ci dans le même plan.

Un éclaté de l'assemblage selon la figure 11 est représenté à la figure 12 et permet de mieux comprendre cette réalisation où les goupilles 12a, 12b, lesquelles sont ici solidaires de la fusée d'essieu 7 mais pourraient être montées de manière différente, encaissent le couple de freinage en supportant le poids de l'étrier, tandis que la vis 8 est utilisée pour le maintien en position en appliquant l'effet de plaquage de l'étrier sur la fusée d'essieu. Un avantage de cette réalisation est qu'il n'y a qu'une seule vis à serrer.

Une autre réalisation non conforme à l'invention du dispositif de fixation d'un étrier de frein à disque sur la fusée d'essieu d'un véhicule automobile est représentée à la figure 13 en liaison avec les figures 14 à 17, tandis que les figures 18 à 20 illustrent de légères variantes.

Dans la réalisation selon les figures 13 à 17, on revient au montage de l'étrier 6 du frein à disque 1 sur la fusée d'essieu 7 à l'aide des deux vis 8a, 8b. Cependant, à la place des goupilles des figures précédentes, on entoure de préférence au moins en partie les vis 8a, 8b par une partie mâle en relief 13 formée par exemple sur la fusée d'essieu 7, tandis qu'une partie femelle en creux 14 est alors formée sur l'étrier 6. Toutefois, cette réalisation pourrait être inversée, la partie mâle étant formée sur l'étrier et la partie femelle sur la fusée d'essieu.

Afin d'obtenir les parties mâle et femelle, on réalise, comme on le voit aux dessins, une sorte de rainurage sur la fusée d'essieu ou sur l'étrier afin que ce rainurage encaisse l'effort donné par le couple de freinage. Cette solution implique un usinage spécifique de l'étrier et de la fusée d'essieu, mais ne nécessite aucun ajout de pièce. Un tel rainurage est réalisé par des lamages effectués sur les appuis entre la fusée d'essieu et l'étrier, et c'est la présence des lamages qui permet d'encaisser le couple de freinage. Aux dessins, on a représenté un épaulement sur chaque appui de sorte que l'appui supérieur encaisse le couple de freinage en marche avant et l'appui inférieur en marche arrière.

Sur le même principe, on peut également, comme illustré aux figures 18 et 19, réaliser deux lamages sur chaque appui. Dans ce cas, les deux fixations entre la fusée d'essieu et l'étrier travaillent dans toutes les phases d'utilisation du véhicule, aussi bien en marche avant qu'en marche arrière.

Comme cela est en outre illustré à la figure 20, l'épaulement peut alors se présenter sous forme d'un ergot cylindrique 15 qui entoure complètement la vis.

Bien évidemment, la fusée d'essieu 7 ou l'étrier 6 peuvent être indifféremment de forme mâle ou femelle et, dans tous les cas, les cotes au niveau des appuis doivent permettre un bon placage de l'étrier sur la fusée d'essieu sans risque de déformation de celle-ci, tout en moins en statique.

L'invention n'est pas limitée aux exemples de réalisation représentés en détail car diverses modifications peuvent y être apportées sans sortir du cadre des revendications annexes.

## Revendications

1. Dispositif de fixation d'un étrier (6) de frein à disque (1) sur une fusée d'essieu (7) corespondante, notamment pour véhicule automobile, qui comprend une seule vis (8) disposée entre la fusée d'essieu (7) et l'étrier (6) pour le maintien en position.de l'étrier (6) sur la fusée d'essieu, et qui comporte des moyens supplémentaires également disposés entre la fusée d'essieu (7) et l'étrier (6) et assurant la résistance au cisaillement lors d'un couple de freinage, **caractérisé en ce que** la vis (8) est montée en position centrale de l'étrier et **en ce que** les moyens supplémentaires comprennent au moins deux goupilles (12a, 12b).

2. Dispositif selon la revendication 1, **caractérisé en ce que** les goupilles (10a, 10b) sont insérées dans des trous prévus respectivement dans la fusée d'essieu (7) et l'étrier (6).

3. Dispositif selon la revendication 1 , **caractérisé en ce que** l'une des goupilles (11a) au moins est solidaire de l'étrier (6) et est insérée dans un trou prévu dans la fusée d'essieu (7).

4. Dispositif selon la revendication 1, **caractérisé en ce que** l'une des goupilles (11b) au moins est solidaire de la fusée d'essieu (7) et est insérée dans un trou prévu dans l'étrier (6).

5. Dispositif selon l'une des revendications 1 à 4, **caractérisé en ce que** les goupilles (10a, 10b ; 11a, 11b ; 12a, 12b) et la vis de maintien (8a, 8b ; 8) sont dans un même plan.

6. Dispositif selon la revendication 1, **caractérisé en ce que** les goupilles (12a, 12b) sont parallèles à la vis de maintien (8) et situées de part et d'autre de la vis à une distance prédéterminée de celle-ci.

## Claims

1. Device for fixing a calliper (6) of a disc brake (1) on a corresponding stub axle (7), in particular for a motor vehicle, which comprises a single screw (8) arranged between the stub axle (7) and the calliper (6) to hold the calliper (6) in position on the stub axle, and which comprises additional means also arranged between the stub axle (7) and the calliper (6) ensuring shear resistance during brake torque, **characterized in that** the screw (8) is mounted in central position of the calliper and **in that** the additional means comprise et least two pins (12a,12b).

2. Device as in claim 1, **characterized in that** pins (10a,10b) are inserted in holes respectively provided in the stub axle (7) and the calliper (6).

3. Device as in claim 1, **characterized in that** at least one of the pins (11a) is secured to the calliper (6) and is inserted in a hole provided in the stub axle (7).

4. Device as in claim 1, **characterized in that** at least one of the pins (11b) is secured to the stub axle (7) and is inserted in a hole provided in the calliper (6).

5. Device as in any of claims 1 to 4, **characterized in that** the pins (10a, 10b; 11a, 11b; 12a, 12b) and the securing screw (8) lie in one same plane.

6. Device as in claim 1, **characterized in that** the pins (12a,12b) are parallel to the securing screw (8) and are positioned either side of the screw at a predetermined distance from it.

## Patentansprüche

1. Vorrichtung zur Befestigung des Bremssattels (6) einer Scheibenbremse (1) auf einem entsprechenden Achsschenkel, insbesondere für ein Kraftfahrzeug, die eine einzige Schraube (8) umfasst, die zwischen dem Achsschenkel (7) und dem Bremssattel (6) angeordnet ist, um den Bremssattel (6) auf dem Achsschenkel in Position zu halten, und die zusätzliche Mittel umfasst, die ebenfalls zwischen dem Achsschenkel (7) und dem Bremssattel (6) angeordnet sind, und die bei einem Bremsmoment die Scherfestigkeit gewährleisten, **dadurch gekennzeichnet, dass** die Schraube (8) in zentraler Position des Bremssattels montiert ist, und **dadurch**, dass die zusätzlichen Mittel zumindest zwei Stifte (12a, 12b) umfassen.

2. Vorrichtung nach Anspruch 1, **dadurch gekennzeichnet, dass** die Stifte (10a, 10b) in Löcher eingesteckt sind, die jeweils im Achsschenkel (7) und im Bremssattel (6) vorgesehen sind.

3. Vorrichtung nach Anspruch 1, **dadurch gekennzeichnet, dass** zumindest der eine von den Stiften (11a) fest mit dem Bremssattel (6) verbunden ist und in ein Loch, das im Achsschenkel (7) vorgesehen ist, eingesteckt ist.

4. Vorrichtung nach Anspruch 1, **dadurch gekennzeichnet, dass** zumindest der eine von den Stiften (11b) fest mit dem Achsschenkel (7) verbunden ist und in ein Loch, das im Bremssattel (6) vorgesehen ist, eingesteckt ist.

5. Vorrichtung nach einem der Ansprüche 1 bis 4, **dadurch gekennzeichnet, dass** sich die Stifte (10a, 10b; 11a, 11b; 12a, 12b) und die Halteschraube (8) auf derselben Ebene befinden.

6. Vorrichtung nach Anspruch 1, **dadurch gekennzeichnet, dass** die Stifte (12a, 12b) parallel zur Halteschraube (8) sind und sich beiderseitig zur Schraube mit einer vorbestimmten Distanz zu dieser befinden.
